# FASCICULE DE BREVET EUROPEEN

(11) **EP 2 457 678 B1**
(45) Date de publication et mention de la délivrance du brevet: **30.03.2016**
(21) Numéro de dépôt: 10193014.7
(22) Date de dépôt: 29.11.2010
(51) Int. Cl.: B23C 5/00, B23C 5/10

(54) **Outil de coupe monobloc bimatériaux**
Monoblock-Schneidewerkzeug aus zwei Materialien
Bi-material one-piece cutting tool

(43) Date de publication de la demande: 30.05.2012
(73) Titulaire: Techspace Aero S.A., 4041 Herstal (Milmort) (BE)
(72) Inventeur: Englebert, Eric, 4530, Villers-Le-Bouillet (BE)
(74) Mandataire: Lecomte, Didier

(56) Documents cités:
- EP-A2- 1 559 493
- DE-A1- 3 208 282
- GB-A- 1 136 305
- US-B1- 7 396 086

## Description

### Domaine technique

L'invention a trait à un outil de coupe, plus particulièrement un outil de coupe monobloc, notamment du type fraise.

### Technique antérieure

Les outils de coupe, plus particulièrement les fraises d'usinage du type une taille ou deux tailles sont couramment du type monobloc en acier rapide (HSS) ou en carbure. L'utilisation de carbure, notamment de carbure de tungstène, permet des vitesses d'usinage sensiblement supérieures à l'acier rapide. L'utilisation de grandes vitesses d'usinage ainsi que d'avancement peut engendrer des vibrations notamment en flexion de l'outil d'usinage. Dans de nombreuses applications l'apparition de vibrations est le facteur le plus limitant pour la productivité et oblige les usineurs à réduire les vitesses de coupe bien en-deçà des capacités outils ou machine. La longueur de l'outil d'usinage joue un rôle important au niveau de la flexion et des vibrations en flexion. Ces vibrations peuvent avoir un impact non négligeable sur le fini de surface. Ceci est particulièrement vrai lors de l'usinage de pièces 3D complexes.

Le document de brevet DE 42 14 355 A1 aborde la problématique de flexions et de vibrations correspondantes d'outils de fraisage. Il divulgue un outil de coupe à plaquette carbure rapportée comprenant un barreau intérieur inséré dans l'outil et s'étendant depuis la queue de l'outil jusqu'à une distance de la partie porte plaquette de l'outil. Le barreau est disposé avec serrage dans un trou borgne pratiqué dans le corps de l'outil. Il est percé longitudinalement de manière à pouvoir assurer une amenée de fluide de coupe à proximité de la plaquette carbure. Ce montage assure une liaison par friction entre le barreau et le corps de l'outil. Le matériau du barreau est plus dur que celui du corps de manière à assurer une augmentation de la rigidité de l'outil ainsi qu'un amortissement des vibrations. La solution de cet enseignement implique un surcoût de fabrication non négligeable.

Le document de brevet DE 32 08 282 A1 divulgue un outil de coupe conforme au préambule de la revendication 1.

### Résumé de l'invention

L'invention a pour objectif de proposer un outil de coupe monobloc performant, plus particulièrement un outil de coupe rigide et peu sujet au phénomène de vibrations en flexion.

L'invention a pour objet un outil de coupe rotatif selon la revendication 1 comprenant: un corps avec un axe longitudinal; au moins une arête de coupe disposée sur une extrémité dite avant du corps; un élément central fretté avec un ajustement serré dans le corps et s'étendant sur au moins une partie dudit corps de manière à créer une surface de contact apte à dissiper par frottement les vibrations en flexion de l'outil lors de son utilisation; l'élément central s'étendant jusqu'à l'extrémité avant du corps et l'arête de coupe étant au moins partiellement formée dans le matériau de l'élément central.

L'élément central est préférentiellement un barreau plein. Il peut être également percé longitudinalement. Il est préférentiellement d'un seul tenant. Il peut cependant également être constitué de plusieurs tronçons.

L'outil de coupe est préférentiellement du type fraise.

Préférentiellement, les tolérances au niveau des diamètres de l'élément central et de l'alésage correspondant du corps sont telles que le diamètre de l'élément central est strictement supérieur au diamètre de l'alésage avant montage.

Selon un mode avantageux de l'invention, l'arête de coupe est également partiellement formée dans le matériau du corps.

Selon un autre mode avantageux de l'invention, le profil de l'arête de coupe est continu à la jonction entre l'élément central et le corps.

Selon un encore autre mode avantageux de l'invention, le matériau de l'élément central est différent du matériau du corps.

Selon un encore autre mode avantageux de l'invention, le matériau de l'élément central présente une vitesse de coupe pour un matériau à couper donné qui est inférieure, préférentiellement de 20%, plus préférentiellement de 30%, 40%, 50%, 60% ou 70%, à celle du matériau du corps.

Selon un encore autre mode avantageux de l'invention, l'élément central est en acier rapide et le corps est en matériau de coupe du type carbure, préférentiellement du carbure de tungstène.

Selon un encore autre mode avantageux de l'invention, l'élément central présente à l'extrémité avant du corps une surface continue avec la surface adjacente du corps.

Selon un encore autre mode avantageux de l'invention, l'élément central est cylindrique et concentrique avec le corps.

Selon un encore autre mode avantageux de l'invention, le diamètre de l'élément central est supérieur ou égal à 15%, préférentiellement 20%, 25%, 30%, 35%, 40%, 45% ou 50%, du diamètre moyen du corps.

Selon un encore autre mode avantageux de l'invention, l'élément central est conique et concentrique avec le corps.

Selon un encore autre mode avantageux de l'invention, le corps comprend au moins une goujure hélicoïdale s'étendant le long du corps depuis l'arête de coupe, l'élément central s'étendant longitudinalement sur au moins la longueur de goujure de l'outil.

Selon un encore autre mode avantageux de l'invention, l'élément central s'étend longitudinalement sur au moins 30%, préférentiellement 50%, 60%, 70%, 80%, 90% ou 100%, de la longueur du corps.

Selon un encore autre mode avantageux de l'invention, le corps comprend une queue d'attachement et l'élément central s'étend longitudinalement de manière à s'arrêter au niveau de la dite queue.

Selon un encore autre mode avantageux de l'invention, l'outil comprend au moins deux arêtes de coupe symétriques sur l'extrémité avant du corps.

Selon un encore autre mode avantageux de l'invention, l'outil comprend au moins une arête de coupe sur la surface latérale du corps.

### Brève description des dessins

La figure 1 est une vue en plan d'un premier outil de coupe conforme à l'invention.
La figure 2 est une vue agrandie en élévation du premier outil de coupe selon la figure 1.
La figure 3 est une vue en plan d'un second outil de coupe conforme à l'invention.
La figure 4 est une vue agrandie en élévation du second outil de coupe selon la figure 3.

### Description des modes de réalisation

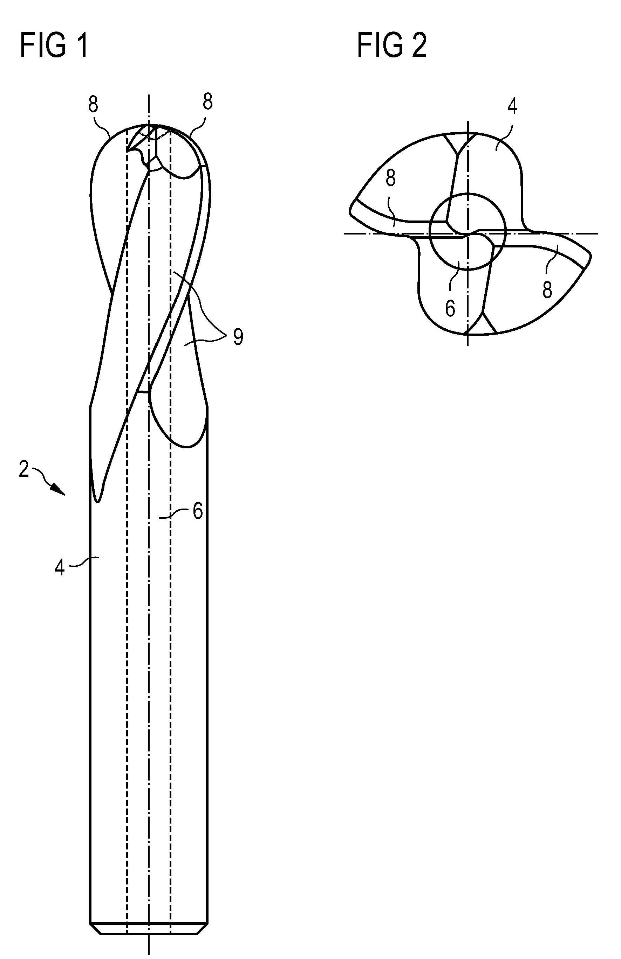

Les figures 1 et 2 sont des illustrations d'une fraise carbure/acier rapide monobloc à attachement cylindrique et bout hémisphérique à deux dents. Cette fraise permet, de par sa forme arrondie, l'usinage de surfaces complexes en trois dimensions.

La fraise 2 est constituée d'un corps 4 en carbure de tungstène dans lequel un barreau cylindrique 6 en acier rapide (ou encore HSS pour High Speed Steel) est inséré. Ce barreau s'étend sur toute la longueur de l'outil et est disposé de manière concentrique au corps, ce dernier étant généralement cylindrique. La partie supérieure ou tête de l'outil comporte deux arêtes de coupe ou dents 8 à son extrémité. Ces deux arêtes présentent, chacune, un profil de quart de cercle, les deux arêtes 8 étant diamétralement opposées de sorte à ce que leurs profils forment ensemble un profil hémisphérique.

Le barreau ou élément central 6 en acier rapide forme les parties centrales des deux arêtes de coupe 8 alors que le corps 4 forme les parties latérales des deux arêtes de coupe 8. Les arêtes de coupe sont donc formées dans deux matériaux différents.

L'outil de coupe présente également deux goujures hélicoïdales 9 destinées à évacuer les copeaux. Chacune s'étendant depuis une arête de coupe.

L'élément central est fretté dans le corps, à savoir grâce à un ajustement serré. Lors de la réalisation de l'outil de coupe, notamment lors de la réalisation de l'alésage du corps 4 et de l'élément central 6, l'homme de métier sélectionnera des dimensions et des tolérances de fabrication notamment au niveau des diamètres respectifs qui assureront un serrage suffisant entre les deux éléments de manière à assurer une liaison par friction. Ces dimensions et tolérances dépendront des matériaux en jeu ainsi que des dimensions de l'outil.

Le corps en matériau carbure est typiquement formé par procédé de frittage. La composition est variable en fonction des caractéristiques de ce matériau. Elle comprend de 80% à 95% de tungstène et des compléments de cobalt, ainsi que divers éléments d'addition comme le niobium. L'alésage du corps est alors formé dés le début de sa fabrication. L'élément central est fabriqué de manière classique en acier rapide. Il est alors fretté dans le corps. Les arêtes de coupe sont ensuite formées de manière classique à partir du brut constitué du corps et de l'élément central.

L'outil de coupe illustré aux figures 1 et 2 présente deux avantages majeurs, à savoir :
(i) Le fait d'avoir un barreau enchâssé dans le corps creux de l'outil permet de créer une surface de contact sur laquelle de l'énergie peut se dissiper par frottement, en fonction des flexions vécues par l'outil lorsqu'il travaille. La dissipation d'énergie permet d'amortir les vibrations provoquées par la coupe interrompue liée au fraisage. Les principales sources de vibrations sont de deux types: les vibrations forcées et les vibrations auto-entretenues. Les vibrations forcées sont principalement engendrées par les défauts d'excentration broche/outil/dents, les interruptions de la coupe (inévitable en fraisage par exemple), ainsi que par des sources extérieures à la machine. Les vibrations auto-entretenues sont liées au fait que l'épaisseur d'un copeau dépend de la position de l'arête de coupe par rapport à la pièce, mais aussi de la position lors du passage précédent. Ainsi peuvent apparaître des vibrations qui s'amplifient à chaque passage d'outil jusqu'à se stabiliser à un niveau qui risque de dénaturer la qualité de la surface usinée.
(ii) Le matériaux le plus performant travaille à la vitesse la plus élevée (la vitesse de coupe étant proportionnelle à la distance entre la section d'arête de coupe et l'axe de rotation de l'outil) et le matériau de coupe le moins performant travaille à une vitesse inférieure.

Le rapport entre les rayons sera notamment fonction des vitesses de coupe recommandées pour les deux matériaux dans la matière à usiner.

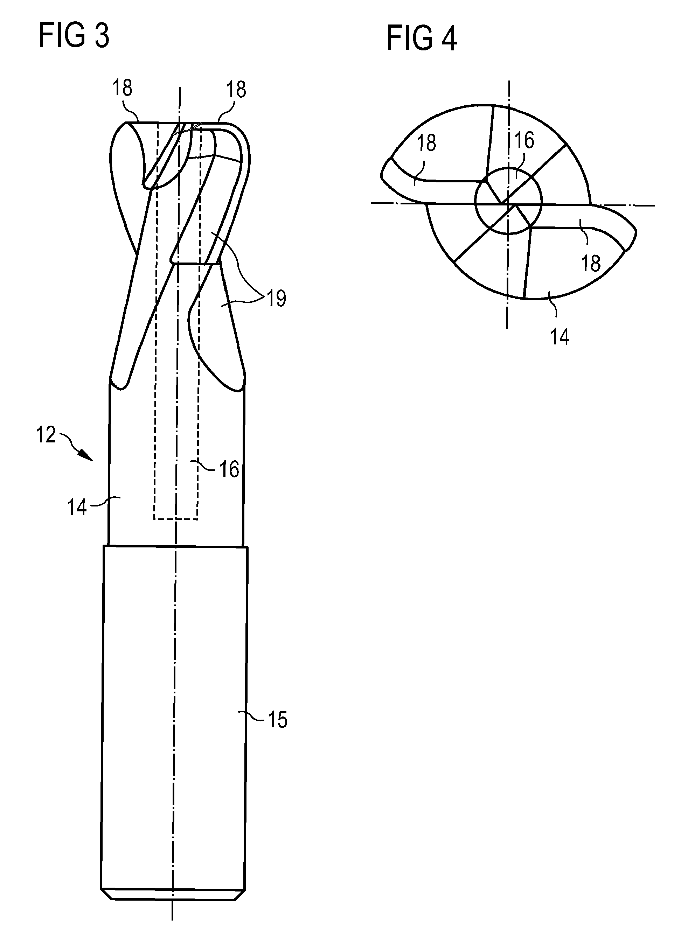

Les figures 3 et 4 illustrent un deuxième exemple de fraise conforme à l'invention, plus précisément une fraise carbure/acier rapide monobloc à attachement cylindrique et à deux dents. Cette fraise 12 comprend un corps 14 en carbure de tungstène, avec une première partie formant une queue cylindrique 15 et une deuxième partie correspondant à la tête de l'outil. Celle-ci comporte deux dents ou arêtes de coupe 18 à son extrémité ou face avant. Un élément central 16 sous forme de cylindre plein est disposé concentriquement dans la tête de l'outil, s'étendant depuis l'extrémité ou face avant jusqu'à proximité de la partie d'attachement de l'outil 15. La fraise est pourvue de deux goujures hélicoïdales 19 destinées à évacuer les copeaux. L'élément central 16 s'étend depuis l'extrémité ou face avant jusqu'au-delà des goujures 19.

Bien que l'élément central 16 ne s'étende pas sur toute la longueur de la fraise, on retrouve cependant les mêmes avantages que pour la fraise illustrées aux figures 1 et 2, à savoir
(i) La dissipation d'énergie par frottement entre l'élément central et l'alésage correspondant du corps. En fonction de divers paramètres comme le diamètre de la partie attachement, la longueur de l'outil et sa vitesse de travail et les efforts de coupe résultants, il peut être suffisant de limiter l'élément central à la tête de l'outil sans pour autant renoncer à la fonction d'amortissement des vibrations.
(ii) L'optimisation des matériaux de coupe, avec le matériau le moins performant au centre de rotation (ou à proximité dudit centre) et le matériau le plus performant à distance du centre de rotation.

Similairement à l'outil de coupe illustré aux figures 1 et 2, le barreau 16 formant l'élément central est fretté dans un alésage correspondant du corps 14.

Les deux modèles de fraise illustrés aux figures 1 à 4 sont purement exemplatifs. L'invention est applicable à d'autres modèles de fraise et d'autres types d'outil de coupe, comme notamment des fraises à deux tailles ou encore des forets.

Il est à noter que l'élément central ne doit pas nécessairement être cylindrique. En effet, il peut présenter une certaine conicité. Dans ce cas, l'alésage correspondant du corps présentera une conicité correspondante.

Il est à noter que l'élément central ne doit pas nécessairement être en acier rapide (HSS). En effet, il peut être en un matériau carbure comme le corps mais de performance moindre. Similairement, le corps ne doit pas nécessairement être en carbure. Il peut en effet être par exemple en acier rapide de performance d'usinage supérieure à l'acier rapide de l'élément central. Le principe est de sélectionner un matériau pour la partie centrale qui est moins performant et donc moins coûteux tout en maintenant les performances globales de l'outil.

## Revendications

1. Outil de coupe rotatif (2 ; 12) comprenant :
un corps (4 ; 14) avec un axe longitudinal ;
au moins une arête de coupe (8 ; 18) disposée sur une extrémité dite avant du corps ;
un élément central (6 ; 16) s'étendant sur au moins une partie dudit corps jusqu'à l'extrémité avant dudit corps, l'arête de coupe (8 ; 18) étant au moins partiellement formée dans le matériau de l'élément central ;
**caractérisé en ce que**
l'élément central (6 ; 16) est fretté avec un ajustement serré dans le corps (4 ; 14) de manière à créer une surface de contact apte à dissiper par frottement les vibrations en flexion de l'outil lors de son utilisation.

2. Outil de coupe selon la revendication 1, **caractérisé en ce que** l'arête de coupe (8 ; 18) est partiellement formée dans le matériau du corps (4 ; 14).

3. Outil de coupe selon la revendication 2, **caractérisé en ce que** le profil de l'arête de coupe (8 ; 18) est continue à la jonction entre l'élément central (6 ; 16) et le corps (4 ; 14).

4. Outil de coupe selon l'une des revendications 1 à 3, **caractérisé en ce que** le matériau de l'élément central (6 ; 16) est différent du matériau du corps (4 ; 14).

5. Outil de coupe selon la revendication 4, **caractérisé en ce que** le matériau de l'élément central (6 ; 16) présente une vitesse de coupe pour un matériau à couper donné qui est inférieure, préférentiellement de 50%, à celle du matériau du corps (4 ; 14).

6. Outil de coupe selon l'une des revendications 1 à 5, **caractérisé en ce que** l'élément central (6 ; 16) est en acier rapide et le corps (4 ; 14) est en matériau de coupe du type carbure, préférentiellement du carbure de tungstène.

7. Outil de coupe selon l'une des revendications 1 à 6, **caractérisé en ce que** l'élément central (6 ; 16) présente à l'extrémité avant du corps (4 ; 14) une surface continue avec la surface adjacente du corps.

8. Outil de coupe selon l'une des revendications 1 à 7, **caractérisé en ce que** l'élément central (6 ; 16) est cylindrique et concentrique avec le corps.

9. Outil de coupe selon la revendication 8, **caractérisé en ce que** le diamètre de l'élément central (6 ; 16) est supérieur ou égal à 15%, préférentiellement 20%, plus préférentiellement 30% du diamètre moyen du corps (4 ; 14).

10. Outil de coupe selon l'une des revendications 1 à 7, **caractérisé en ce que** l'élément central est conique et concentrique avec le corps.

11. Outil de coupe selon l'une des revendications 1 à 10, **caractérisé en ce que** le corps (4 ; 14) comprend au moins une goujure hélicoïdale (9 ; 19) s'étendant le long du corps depuis l'arête de coupe, l'élément central (6 ; 16) s'étendant sur au moins la longueur de goujure de l'outil.

12. Outil de coupe selon l'une des revendications 1 à 11, **caractérisé en ce que** l'élément central (6 ; 16) s'étend longitudinalement sur au moins 30%, préférentiellement 50%, plus préférentiellement 100%, de la longueur du corps (4 ; 14).

13. Outil de coupe selon l'une des revendications 1 à 12, **caractérisé en ce que** le corps (4; 14) comprend une queue et l'élément central (6; 16) s'étend longitudinalement de manière à s'arrêter au niveau de la dite queue.

14. Outil de coupe selon l'une des revendications 1 à 13, **caractérisé en ce qu'**il comprend au moins deux arêtes de coupe symétriques (8 ; 18) sur l'extrémité avant du corps.

15. Outil de coupe selon l'une des revendications 1 à 14, **caractérisé en ce qu'**il comprend au moins une arête de coupe sur la surface latérale du corps.

## Patentansprüche

1. Rotierendes Schneidewerkzeug (2; 12), bestehend aus:
einem Korpus (4; 14) mit einer Längsachse;
mindestens einer Schneidekante (8; 18), die an einem so genannten Vorderende des Korpus angeordnet ist;
einem zentralen Element (6; 16), das sich zumindest über einen Teil des genannten Korpus und bis zum Vorderende des genannten Korpus erstreckt, wobei die Schneidekante (8; 18) mindestens teilweise aus dem Material des zentralen Elements besteht;
**dadurch gekennzeichnet, dass**
das zentrale Element (6; 16) eng in den Korpus (4; 14) eingepasst ist, um eine Kontaktoberfläche zu erzeugen, die in der Lage ist, die Biegungsvibrationen des Werkzeugs bei dessen Verwendung mittels Reibung abzuleiten.

2. Schneidewerkzeug nach Anspruch 1, **dadurch gekennzeichnet, dass** die Schneidekante (8; 18) teilweise aus dem Material des Korpus (4; 14) besteht.

3. Schneidewerkzeug nach Anspruch 2, **dadurch gekennzeichnet, dass** das Profil der Schneidekante (8; 18) in der Verbindung zwischen dem zentralen Element (6; 16) und dem Korpus (4; 14) enthalten ist.

4. Schneidewerkzeug nach einem der Ansprüche 1 bis 3, **dadurch gekennzeichnet, dass** das Material des zentralen Elements (6; 16) vom Material des Korpus (4; 14) abweicht.

5. Schneidewerkzeug nach Anspruch 4, **dadurch gekennzeichnet, dass** das Material des zentralen Elements (6; 16) eine Schneidegeschwindigkeit für ein zu bestimmtes zu schneidendes Material aufweist, die vorzugsweise um 50% geringer ist, als diejenige des Materials des Korpus (4; 14).

6. Schneidewerkzeug nach einem der Ansprüche 1 bis 5, **dadurch gekennzeichnet, dass** das zentrale Element (6; 16) aus Schnellstahl besteht und der Korpus (4; 14) aus einem Schneidematerial vom Typ Karbid und vorzugsweise vom Typ Wolframkarbid besteht.

7. Schneidewerkzeug nach einem der Ansprüche 1 bis 6, **dadurch gekennzeichnet, dass** das zentrale Element (6; 16) am vorderen Ende des Korpus (4; 14) eine durchgehende Oberfläche mit der benachbarten Oberfläche des Korpus besitzt.

8. Schneidewerkzeug nach einem der Ansprüche 1 bis 7, **dadurch gekennzeichnet, dass** das zentrale Element (6, 16) zylinderförmig ist und den Korpus konzentrisch umgibt.

9. Schneidewerkzeug nach Anspruch 8, **dadurch gekennzeichnet, dass** der Durchmesser des zentralen Elements (6; 16) mehr als 15%, vorzugsweise 20% und noch bevorzugter 30% des mittleren Durchmessers des Korpus (4; 14) ausmacht.

10. Schneidewerkzeug nach einem der Ansprüche 1 bis 7, **dadurch gekennzeichnet, dass** das zentrale Element konisch ist und den Korpus konzentrisch umgibt.

11. Schneidewerkzeug nach einem der Ansprüche 1 bis 10, **dadurch gekennzeichnet, dass** der Korpus (4; 14) mindestens eine Spiralnut (9, 19) aufweist, die sich ab der Schneidekante entlang des Korpus erstreckt, wobei sich das zentrale Element (6; 16) mindestens über die Länge der Spiralnut des Werkzeugs erstreckt.

12. Schneidewerkzeug nach einem der Ansprüche 1 bis 11, **dadurch gekennzeichnet, dass** sich das zentrale Element (6; 16) in Längsrichtung über mindestens 30%, vorzugsweise 50%, noch bevorzugter 100% der Länge des Korpus (4; 14) erstreckt.

13. Schneidewerkzeug nach einem der Ansprüche 1 bis 12, **dadurch gekennzeichnet, dass** der Korpus (4; 14) einen Schaft beinhaltet und sich das zentrale Element (6; 16) in Längsrichtung in der Weise erstreckt, dass es in Höhe des genannten Schaftes endet.

14. Schneidewerkzeug nach einem der Ansprüche 1 bis 13, **dadurch gekennzeichnet, dass** es mindestens zwei symmetrische Schneidekanten (8; 18) am Vorderende des Korpus beinhaltet.

15. Schneidewerkzeug nach einem der Ansprüche 1 bis 14, **dadurch gekennzeichnet, dass** es mindestens eine Schneidekante auf der seitlichen Fläche des Korpus beinhaltet.

## Claims

1. Rotating cutting tool (2 ,12) comprising:
a body (4, 14) with a longitudinal axis;
at least one cutting edge (8, 18) located on the front end of the said body;
a core (6, 16) extending over at least a portion of the said body to the front end of the body (4, 14), the cutting edge (8, 18) being is at least partially formed of the core material;
**characterized in that**
the core (6, 16) is joined to the body (4, 14) with an interference fit so as to form a contact surface able to dissipate by friction the bending vibrations of the tool during its use.

2. Cutting tool in accordance with Claim 1, wherein the cutting edge (8, 18) is partially formed of the material of the body (4, 14).

3. Cutting tool in accordance with Claim 2, wherein the profile of the cutting edge (8, 18) is continuous at the junction between the core (6, 16) and the body (4, 14).

4. Cutting tool in accordance with one of Claims 1 to 3, wherein the material of the core (6, 16) is different from the material of the body (4, 14).

5. Cutting tool in accordance with Claim 4, wherein the material of the core (6, 16) has a cutting speed for a given material to be machined which is less, preferably 50% less, than that of the material of the body (4, 14).

6. Cutting tool in accordance with one of Claims 1 to 5, wherein the core (6, 16) is made of HSS and the body (4, 14) is made of a carbide cutting material, preferably tungsten carbide.

7. Cutting tool in accordance with one of Claims 1 to 6, wherein the surface of the core (6, 16) at the front end of the body (4, 14) is continuous with the adjacent surface of the body.

8. Cutting tool in accordance with one of Claims 1 to 7, wherein the core (6, 16) is cylindrical and concentric with the body.

9. Cutting tool in accordance with Claim 8, wherein the diameter of the core (6, 16) is greater than or equal to 15%, preferably 20%, more preferably 30% of the mean diameter of the body (4, 14).

10. Cutting tool in accordance with one of Claims 1 to 7, wherein the core is conical and concentric with the body.

11. Cutting tool in accordance with one of Claims 1 to 10, wherein the body (4, 14) comprises at least one helical flute (9, 19) extending along the body from the cutting edge, the core (6, 16) extending longitudinally for at least the length of the tool's flute.

12. Cutting tool in accordance with one of Claims 1 to 11, wherein the core (6, 16) extends longitudinally over at least 30%, preferably 50%, more preferably 100%, of the length of the body (4, 14).

13. Cutting tool in accordance with one of Claims 1 to 12, wherein the body (4, 14) comprises a shank and the core (6, 16) extends longitudinally so as to stop at the end of the said shank.

14. Cutting tool in accordance with one of Claims 1 to 13, wherein it comprises at least two symmetrical cutting edges (8, 18) at the front end of the body (4, 14).

15. Cutting tool in accordance with one of Claims 1 to 14, wherein it comprises at least one cutting edge on the lateral surface of the body (4,14).
